# EUROPEAN PATENT SPECIFICATION

(11) **EP 2 277 619 B1**
(45) Date of publication and mention of the grant of the patent: **20.06.2012**
(21) Application number: 10161410.5
(22) Date of filing: 29.04.2010
(51) Int. Cl.: B01F 3/04, B67D 1/00, C02F 1/68

(54) **Device for saturating drinking water with carbon dioxide through recirculation**
Anlage zur Sättigung von Trinkwasser mit Kohlendioxid durch Rezirkulation
Dispositif pour saturer l'eau potable avec dioxyde de carbone par recirculation

(30) Priority: 22.07.2009 IT MI20091295
(43) Date of publication of application: 26.01.2011
(73) Proprietor: Fluid-O-Tech S.r.l., 20094 Corsico (MI) (IT)
(72) Inventor: Gambaro, Eric, 16161 Genova (GE) (IT); Filip, Gabriel, 16161 Genova (GE) (IT)
(74) Representative: Branca, Emanuela

(56) References cited:
- WO-A1-2009/016998
- WO-A1-2009/057854
- DE-A1-102005 021 192
- DE-C1- 10 121 841
- GB-A- 2 059 791
- US-A- 3 370 755
- US-A- 4 011 733

## Description

The present invention refers to a device for saturating drinking water with carbon dioxide or, in other words, to a device which is able to add carbon dioxide (CO₂) to water. Treatment of drinking water at the point of use is becoming increasingly widespread, and is available in many nations regardless of the condition of the water distribution systems, be they good or not able to guarantee a standard comparable to that of bottled water products.

The task of plants and systems for refining drinking water is that of ensuring with a high degree of certainty that the quality of the water at the point of use is good and, at the same time, that of improving the chemical and physical characteristics of the water intended for human consumption.

According to user needs, who require for example very light water rather than sparkling water and so forth, there are thus different types of treatment which exploit different principles. Amongst systems for refining water, there are filtering systems, which can base their action on physical principles, on chemical principles, on simple mechanical actions or on a combination of such principles. There are then apparatuses called gassing (or even carbonator or saturator) devices, which are able to make tap water sparkling by enriching it with carbon dioxide (CO₂) contained in special cartridges.

In order to add carbon dioxide to drinking water, so as to obtain sparkling water (or also called "soda water") intended for human consumption, normally a saturation process is carried out, i.e. dissolving carbon dioxide into the water.

The levels of gas in the soda water which are pleasant to the human palate are usually of between 3÷3.5 volumes of gas (CO₂), at the temperature of about 6°C, for each single volume of water. At low temperatures (6°C), with pressure of around 3.5 bars, there is indeed a good gassing of the water as a function of the greater specific contact surface which can be obtained and of the time in contact. In a pressurized container, at low temperature and with a free surface which separates the water from the carbon dioxide, the production of an excellent sparkling water is obtained in about 10÷12 hours.

Technology has always tried to produce sparkling water in the shortest time possible. The production technologies of sparkling water generally applied, the most are related to the concept of increasing the specific surface in contact between water and carbon dioxide or to the concept of increasing the operating pressure.

Most of the devices for saturating drinking water in production to this day use the principle of creating a Venturi effect on the free surface of the water contained in the tank, so as to increase the exchange surface between water and carbon dioxide, increasing the localised pressure.

The tanks must therefore operate at pressures which are double or triple with respect to the static pressure of the carbon dioxide and the pumps for supplying water must be sized accordingly.

Other types of saturating devices, on the other hand, foresee there to be a mixer which increases the exchange surface between the water and the carbon dioxide, inside the tank of the saturator.

In both cases a thrust pump is however necessary which overcomes the pressure increase of the carbon dioxide due to the reduction in volume occupied by the gas when the water is being loaded.

Among the saturating devices provided with a mixer, there are some which operate without a pump, discharging the residual pressure of the carbon dioxide at each saturating cycle. Such devices however, lead to a substantial consumption of carbon dioxide.

Finally, on the market there are saturating devices which are capable of managing the admission of water into the tank without the aid of a pump, controlling the pressure of the carbon dioxide through a compensated pressure reducer. Based upon this principle there are devices on the market which exploit a cylinder with balls inside it which act as a mixer.

Saturating devices with recirculation means of the carbonated water are also known in the state of the art. Some of these devices are disclosed, for example, in documents GB 2 059 791 A, DE 101 21 841 C1 and DE 10 2005 021 192 A1. Documents WO 2009/016998 A1, WO 2009/057854 A1, US 4 011 733 A and US 3 370 755 A show other examples of saturating devices known in the state of the art.

The general purpose of the present invention is therefore that of making a device for saturating drinking water with carbon dioxide which is able to solve the aforementioned drawbacks of the prior art in an extremely simple, cost-effective and particularly functional manner.

In particular, one purpose of the present invention is that of making a device for saturating drinking water with carbon dioxide which is capable of reproducing optimal saturation conditions, reducing the costs, the bulk and the operating pressure, leaving the final product (sparkling water) unaltered.

This purpose according to the present invention is achieved by making a device for saturating drinking water with carbon dioxide as outlined in claim 1.

Further characteristics of the invention are highlighted in the dependent claims, which are integral part of the present description.

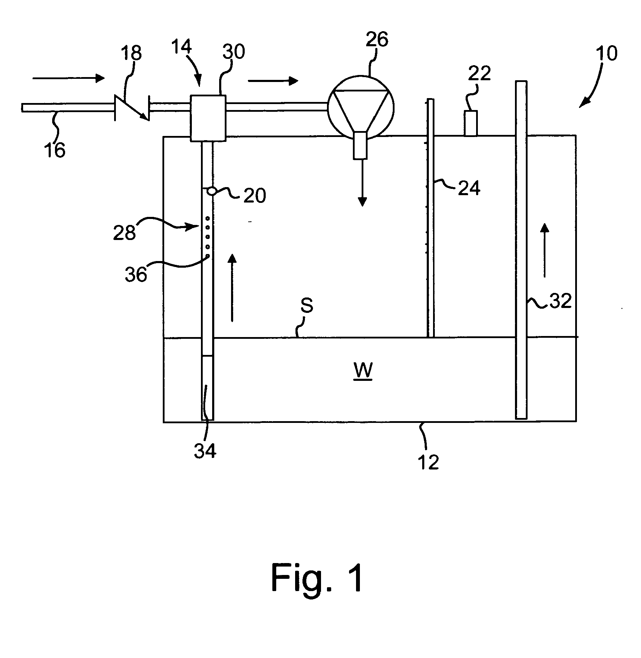

The characteristics and the advantages of a device for saturating drinking water with carbon dioxide according to the present invention shall become clearer from the following description, given as an example and not for limiting purposes, with reference to the attached schematic drawing, in which the single figure is a completely schematic view that illustrates the fundamental components of such a device for saturating drinking water with carbon dioxide.

With reference to the figure, a device for saturating drinking water with carbon dioxide is shown made according to the present invention, operating through recirculation and wholly indicated with reference numeral 10.

First of all, the device 10 comprises a pressurized tank 12 for storing water, normally drawn from the water distribution system, to undergo saturation through carbon dioxide (CO₂). The tank 12 is normally arranged in a cold place, at a temperature of between about 4°C and about 10°C, or in any case it is cooled down to such a temperature by means of a refrigeration system of any type known in the state of the art. The temperature of about 4÷10°C is indeed optimal to obtain the saturation of the carbon dioxide in the water from the distribution system.

The device 10 then comprises a fixed part 14, called head, which is used as a portion for hooking onto the tank 12 and on which the inlets of the water system and of the carbon dioxide are formed. The connection between the head 14 and the tank 12 can occur through a common collar band.

More precisely, the supply water is introduced into the tank 12 through an inlet conduit 16, formed on the head 14 and is protected by a double check valve 18, whereas the carbon dioxide, drawn from a special pressurized cartridge (not shown) or from another suitable source, is introduced into the tank 12 itself through at least one inlet nozzle 20, also formed on the head 14 and is protected by a double check valve (not shown).

The device 10 also comprises a carbon dioxide flow reducer 22, as well as a float switch 24 able to control the admission of water from the distribution system into the tank 12 and able to keep a separating free surface S between the water itself and the carbon dioxide supplied through the inlet nozzle 20, as shall be better specified in the rest of the description.

The admission of water from the distribution system, from the relative inlet conduit 16, into the tank 12 is controlled (but only partially, as shall be better specified in the rest of the description) from the float switch 24 by means of a pump 26 operatively connected to it. The pump 26 is preferably of the type with gears, and it is made from a specific material suitable for coming into contact with food products, in this case drinking water, and it is capable of operating with carbonated water.

According to the invention, the device 10 is provided with a recirculation pipe 28 arranged in fluid communication with the inlet conduit 16 of the water system and with the pump 26. Through the recirculation pipe 28, the suction of water W from the bottom of the tank 12, the saturation of water W itself inside the pump 26, as well as the creation of a jet of such a carbonated water W is obtained inside the tank 12 itself, more precisely on the free surface S of the water W, upon the actuation of the pump 26, thus contributing to an even higher saturation of the water W.

At the intersection between the inlet conduit 16 of the water system and the recirculation pipe 28 there is a solenoid valve 30. The solenoid valve 30 is normally closed so as to allow for the water from the distribution system to feed into the tank 12 through the relative inlet conduit 16 and the pump 26. Upon opening the solenoid valve 30, on the other hand, the recirculation of the carbonated water W is activated through the recirculation pipe 28 and the pump 26 itself. Preferably, the solenoid valve 30 and the pump 26 are placed at a minimum distance from one another to avoid captivation phenomena of the pump 26 itself.

The device 10 is also provided with a relief valve (not shown), which ensures a constant operating pressure inside the tank 12 and consequently prevents operating pressures exceeding the operating capacity of the pump 26 from generating inside the tank 12 itself. The device 10 is finally, in a *per se* known way, provided with an outlet conduit 32 for the sparkling water W, that is to say carbonated, from the tank 12.

An electronic card (not shown), supplied with low voltage power, provides for controlling all the components of the device 10 and controls all the relative operations.

The operation of a device 10 for saturating drinking water with carbon dioxide according to the present invention is thus carried out as follows.

As previously mentioned, the tank 12 must be placed in a refrigerated environment, at a temperature of between about 4°C and about 10°C. Alternatively, the water from the distribution system admitted into the tank 12 must be supplied at the aforementioned temperature. In order for the device 10 to operate well, the pressure of the water of the distribution system must be lower than the pressure of the carbon dioxide by a value equal to at least 0.5 Bars.

Through the float switch 24 the height of the free surface S of the water W contained in the tank 12 is determined, whereas the pressure of the carbon dioxide, that enters into the tank 12 itself through the inlet nozzle 20, is adjusted by a pressure reducer placed upstream of the device 10.

By drawing carbonated water W from the tank 12, through the outlet conduit 32, the float switch 24 which controls the pump 26 is uncovered. By reducing the amount (volume) of water W present inside the tank 12 the following effects are obtained:
- the volume occupied by the carbon dioxide in the tank 12 increases and, consequently, also the pressure of the carbon dioxide itself is reduced, since the flow reducer 22 prevents carbon dioxide from entering into the tank 12 in a large amount to occupy the volume made available by the water W after it has been drawn through the outlet conduit 32;
- since the volume of the water W inside the tank 12 decreases, in order to balance the pressure, it occurs that water is introduced from the distribution system into the tank 12 itself, through the conduit 16, in a completely natural manner, that is to say without intervention of the pump 26. Consequently, therefore, the pump 26 only has an auxiliary function when the water from the distribution system is let into the tank 12, but does not have an actual "thrust" function.

In the case in which there is an overpressure inside the tank 12, due to the continuous variations of the fluid volumes (water and CO₂), the pump 26, pushing water into the tank 12 itself, would cause the relief valve to open, letting out the excess gas (CO₂).

When the free surface S of the water W inside the tank 12 reaches the float switch 24, the electronic card of the device 10 controls the solenoid valve 30 arranged on the recirculation pipe 28 to open. The recirculation pipe 28 is connected to the inlet conduit 16 of the water of the distribution system, downstream of the double check valve 18, and it is provided with a drawing tube section 34 below it which draws water W from the bottom of the tank 12.

The portion of the recirculation pipe 28 which is inside the tank 12, in the part exposed to carbon dioxide, that is to say above the free surface S of the water W, on the other hand, has a plurality of holes 36 for returning the carbon dioxide present in the tank 12 itself, during suction. Such a return of carbon dioxide is facilitated thanks to the presence of a narrow tube section on the recirculation pipe 28, upstream of the holes 36, in a way such as to create a Venturi effect.

For a predetermined time period (60÷70 seconds are enough for a good saturation) the pump 26 continues to operate, drawing water W from the recirculation pipe 28, since in the latter there is a greater pressure of water W admitted from the drawing tube section 34. By increasing the recirculation time, the degree of saturation of the water W is consequently also increased. In this stage there is the real saturation of the water W with carbon dioxide, since inside the gear pump 26 the conditions of contact and of pressure necessary for water W itself to absorb the carbon dioxide are created.

The reintroduction of water W, pushed from the pump 26, inside the tank 12 has the function of creating a jet which affects the free surface S of the water W, contributing towards a greater saturation of the water W itself. By varying the recirculation time or, in other words, by varying the time period that the solenoid valve 30 is open through the electronic card, it is thus possible to make the level for saturating the water W vary according to the specific needs.

The discharge of sparkling water W from the relative conduit 32 is promoted by the pressure inside the tank 12 in the initial stage, to then undergo the thrust of the water from the distribution system admitted into the tank 12 itself, whether it be pushed or not by the pump 26.

In order to avoid possible cavitations of the pump 26 in the initial stage, due to the presence of carbon dioxide gas in the conduits, at each actuation of the pump 26 itself there is the simultaneous opening of the recirculation solenoid valve 30 for a minimum time period (about 1÷2 seconds), with the purpose of evacuating residual carbon dioxide gas.

It has thus been seen that the device for saturating drinking water with carbon dioxide according to the present invention achieves the purposes previously highlighted, by obtaining, in particular, the following advantages:
- the possibility of saturating water with carbon dioxide (CO₂) during the suction stage, inside the gears of the pump;
- the possibility of increasing the saturation of water with carbon dioxide (CO₂) in the stage of introduction of the water into the tank;
- the possibility of making the level for saturating the water vary by varying the recirculation time;
- the possibility of reducing the power required by the pump for the inlet of water inside the tank through the carbon dioxide flow reducer;
- the possibility of ensuring a constant operating pressure and of preventing the pump from operating under strain, thanks to the presence of a relief valve.

The device for saturating drinking water with carbon dioxide of the present invention thus conceived can in any case undergo numerous modifications and variants, all covered by the same inventive concept; moreover, all the details can be replaced by technically equivalent elements. In practice the materials used, as well as the shapes and sizes, may be any according to the technical requirements.

The scope of protection of the invention is thus defined by the attached claims.

## Claims

1. Device (10) for saturating drinking water with carbon dioxide (CO₂), comprising a pressurized tank (12) for storing water drawn from the water distribution system through an inlet conduit (16), at least one nozzle (20) for admitting carbon dioxide into said tank (12), a pump (26), a conduit (32) for discharging carbonated water (W) from said tank (12) and a recirculation pipe (28) arranged in fluid communication with said inlet conduit (16) and said pump (26), through said recirculation pipe (28) the suction of water (W) from the bottom of said tank (12), the saturation of water (W) inside said pump (26), as well as the creation of a carbonated water (W) jet inside said tank (12), being obtained upon actuation of said pump (26), thus contributing to an even higher saturation of said carbonated water (W), **characterized in that** said recirculation pipe (28) is provided with a plurality of holes (36) for taking in the carbon dioxide present in said tank (12) in the suction stage, the return of the carbon dioxide being facilitated by the presence of a narrow tube section on said recirculation pipe (28), upstream of said holes (36), in a way such as to create a Venturi effect.

2. Device (10) according to claim 1, **characterized in that** it comprises a solenoid valve (30) arranged at the intersection of said distribution system water inlet conduit (16) and said recirculation pipe (28), said solenoid valve (30) being able to switch from a closed position, to allow for distribution system water feed into said tank (12) through said inlet conduit (16) and said pump (26), to an open position, to activate carbonated water (W) recirculation through said recirculation pipe (28) and said pump (26).

3. Device (10) according to claim 2, **characterized in that** said solenoid valve (30) and said pump (26) are located at a minimum distance one to the other, in order to avoid cavitation phenomena of said pump (26).

4. Device (10) according to anyone of the preceding claims, **characterized in that** said recirculation pipe (28) is provided, in its lower part, with a drawing tube section (34), which draws carbonated water (W) from the bottom of said tank (12).

5. Device (10) according to claim 1, **characterized in that** said plurality of holes (36) is obtained on the portion of said recirculation pipe (28) which is located, inside said tank (12), in the part exposed to carbon dioxide, that is above the free carbonated water (W) surface (S).

6. Device (10) according to anyone of the preceding claims, **characterized in that** said inlet conduit (16) is protected by a double check valve (18).

7. Device (10) according to claim 6, **characterized in that** said recirculation pipe (28) is connected to said distribution system water inlet conduit (16) downstream of said double check valve (18).

8. Device (10) according to anyone of the preceding claims, **characterized in that** it comprises a carbon dioxide flow reducer (22) to prevent a large amount of carbon dioxide from entering said tank (12) in order to occupy the volume provided by the carbonated water (W) once it has been drawn through said outlet conduit (32).

9. Device (10) according to anyone of the preceding claims, **characterized in that** it comprises a float switch (24) which is able to control the inflow of the distribution system water into said tank (12).

10. Device (10) according to anyone of the preceding claims, **characterized in that** it comprises a relief valve, which ensures a constant operating pressure inside said tank (12) and thereby prevents the generation of operating pressures exceeding the operating capacity of said pump (26).

11. Device (10) according to anyone of the preceding claims, **characterized in that** it comprises an electronic card, supplied with low-voltage power, which is able to provide for the control of all the components of said device (10) and for the management of all related operations.

12. Device (10) according to claim 11, **characterized in that** said electronic card is able to change the opening time interval of said solenoid valve (30), and thus the recirculation time, to thereby change the carbonated water (W) saturation level.

13. Device (10) according to claim 1, **characterized in that** said pump (26) is a gear pump.

## Patentansprüche

1. Anlage (10) zur Sättigung von Trinkwasser mit Kohlendioxid (CO₂), die einen Drucktank (12) zum Speichern von dem Wasserverteilungssystem durch eine Zulaufleitung (16) entnommenem Wasser, mindestens eine Düse (20) zum Einlassen von Kohlendioxid in diesen Tank (12), eine Pumpe (26), eine Leitung (32) zum Ablassen von kohlensaurem Wasser (W) aus diesem Tank (12) und ein in Fluidverbindung mit der Zulaufleitung (16) und der Pumpe (26) angeordnetes Umlaufrohr (28) umfasst, wobei durch dieses Umlaufrohr (28) das Ansaugen des Wassers (W) vom Boden des Tanks (12), die Sättigung des Wassers (W) innerhalb der Pumpe (26) und auch die Erzeugung eines Strahls kohlensauren Wassers (W) innerhalb des Tanks (12) bei Betätigung der Pumpe (26) bewerkstelligt werden, so dass es zu einer sogar höheren Sättigung des kohlensauren Wassers (W) beiträgt, **dadurch gekennzeichnet, dass** dieses Umlaufrohr (28) mit einer Vielzahl von Löchern (36) zum Ansaugen des im Tank (12) befindlichen Kohlendioxids während des Saugstadiums versehen ist, wobei die Rückführung des Kohlendioxids durch das Vorhandensein eines engen Rohrabschnitts beim Umlaufrohr (28) stromaufwärts der Löcher (36) dergestalt erleichtert wird, dass ein Venturi-Effekt erzeugt wird.

2. Anlage (10) nach Anspruch 1, **dadurch gekennzeichnet, dass** sie ein am Kreuzungspunkt der Wasserzulaufleitung (16) des Verteilungssystems und des Umlaufrohrs (28) angeordnetes Magnetventil (30) umfasst, wobei dieses Magnetventil (30) imstande ist, von einer geschlossenen Stellung, um zu ermöglichen, dass das Verteilungssystem den Tank (12) durch die Zulaufleitung (16) und die Pumpe (26) mit Wasser versorgt, zu einer geöffneten Stellung zu wechseln, um den Umlauf des kohlensauren Wassers (W) durch das Umlaufrohr (28) und die Pumpe (26) zu aktivieren.

3. Anlage (10) nach Anspruch 2, **dadurch gekennzeichnet, dass** das Magnetventil (30) und die Pumpe (26) in einem Mindestabstand voneinander angeordnet sind, um Kavitationserscheinungen bei der Pumpe (26) zu vermeiden.

4. Anlage (10) nach einem der vorherigen Ansprüche, **dadurch gekennzeichnet, dass** das Umlaufrohr (28) an seinem unteren Teil mit einem Saugrohrabschnitt (34) versehen ist, der kohlensaures Wasser (W) vom Boden des Tanks (12) ansaugt.

5. Anlage (10) nach Anspruch 1, **dadurch gekennzeichnet, dass** die Vielzahl von Löchern (36) auf dem Abschnitt des Umlaufrohrs (28) ausgebildet ist, der innerhalb des Tanks (12) in dem dem Kohlendioxid ausgesetzten Teil angeordnet ist, der sich über der freien Oberfläche (S) des kohlensauren Wassers (W) befindet.

6. Anlage (10) nach einem der vorherigen Ansprüche, **dadurch gekennzeichnet, dass** die Zulaufleitung (16) durch ein Doppelrückschlagventil (18) geschützt ist.

7. Anlage (10) nach Anspruch 6, **dadurch gekennzeichnet, dass** das Umlaufrohr (28) stromabwärts des Doppelrückschlagventils (18) mit der Wasserzulaufleitung (16) des Verteilungssystems verbunden ist.

8. Anlage (10) nach einem der vorherigen Ansprüche, **dadurch gekennzeichnet, dass** sie einen Kohlendioxid-Strömungsreduzierer (22) umfasst, um zu verhindern, dass eine große Menge Kohlendioxid in den Tank (12) eintritt, um den Raum einzunehmen, den das kohlensaure Wasser (W) hinterlässt, nachdem es durch die Auslassleitung (32) abgesaugt wurde.

9. Anlage (10) nach einem der vorherigen Ansprüche, **dadurch gekennzeichnet, dass** sie einen Schwimmerschalter (24) umfasst, der den Zulauf des Wassers des Verteilungssystems in den Tank (12) steuern kann.

10. Anlage (10) nach einem der vorherigen Ansprüche, **dadurch gekennzeichnet, dass** sie ein Überdruckventil umfasst, das einen konstanten Betriebsdruck im Tank (12) gewährleistet und **dadurch** verhindert, dass Betriebsdrücke erzeugt werden, welche die Betriebskapazität der Pumpe (26) überschreiten.

11. Anlage (10) nach einem der vorherigen Ansprüche, **dadurch gekennzeichnet, dass** sie eine mit Niederspannungsstrom gespeiste Elektronikkarte umfasst, die imstande ist, die Steuerung aller Komponenten der Anlage (10) und das Management aller zugehörigen Arbeitsvorgänge zu besorgen.

12. Anlage (10) nach Anspruch 11, **dadurch gekennzeichnet, dass** die Elektronikkarte das Zeitintervall der Öffnung des Magnetventils (30) und somit die Umlaufzeit ändern kann, um **dadurch** den Sättigungsgrad des kohlensauren Wassers (W) zu ändern.

13. Anlage (10) nach Anspruch 1, **dadurch gekennzeichnet, dass** die Pumpe (26) eine Zahnradpumpe ist.

## Revendications

1. Dispositif (10) pour saturer l'eau potable avec du dioxyde de carbone (CO₂), comprenant un réservoir sous pression (12) pour stocker de l'eau prélevée du système de distribution d'eau à travers un conduit d'entrée (16), au moins une buse (20) pour admettre le dioxyde de carbone dans ledit réservoir (12), une pompe (26), un conduit (32) pour évacuer l'eau gazéifiée (W) à partir dudit réservoir (12) et un tuyau de recirculation (28) disposé en communication fluide avec ledit conduit d'entrée (16) et ladite pompe (26), à travers ledit tuyau de recirculation (28) l'aspiration de l'eau (W) à partir du fond dudit réservoir (12), la saturation de l'eau (W) à l'intérieur de ladite pompe (26), ainsi que la création d'un jet d'eau gazéifiée (W) à l'intérieur dudit réservoir (12), étant obtenues lors de l'actionnement de ladite pompe (26), contribuant ainsi à une saturation encore plus élevée de ladite eau gazéifiée (W), **caractérisé en ce que** ledit tuyau de recirculation (28) est pourvu d'une pluralité de trous (36) pour absorber le dioxyde de carbone présent dans ledit réservoir (12) dans l'étape d'aspiration, le retour du dioxyde de carbone étant facilité par la présence d'une section de tube étroit sur ledit tuyau de recirculation (28), en amont desdits trous (36), de manière à créer un effet Venturi.

2. Dispositif (10) selon la revendication 1, **caractérisé en ce qu'**il comprend une électrovanne (30) disposée à l'intersection dudit conduit d'entrée d'eau du système de distribution (16) et dudit tuyau de recirculation (28), ladite électrovanne (30) étant en mesure de permuter d'une position fermée, pour permettre l'alimentation en eau du système de distribution dans ledit réservoir (12) à travers ledit conduit d'entrée (16) et ladite pompe (26), vers une position ouverte, pour activer la recirculation de l'eau gazéifiée (W) à travers ledit tuyau de recirculation (28) et ladite pompe (26).

3. Dispositif (10) selon la revendication 2, **caractérisé en ce que** ladite électrovanne (30) et ladite pompe (26) sont situées à une distance minimale l'une de l'autre, afin d'éviter des phénomènes de cavitation de ladite pompe (26).

4. Dispositif (10) selon une quelconque des revendications précédentes, **caractérisé en ce que** ledit tuyau de recirculation (28) est pourvu, dans sa partie inférieure, d'une section de tuyau de prélèvement (34), qui prélève de l'eau gazéifiée (W) à partir du fond dudit réservoir (12).

5. Dispositif (10) selon la revendication 1, **caractérisé en ce que** ladite pluralité de trous (36) est obtenue sur la partie dudit tuyau de recirculation (28) qui est située, à l'intérieur dudit réservoir (12), dans la partie exposée à du dioxyde de carbone, qui est au-dessus de la surface (S) d'eau gazéifiée (W) libre.

6. Dispositif (10) selon une quelconque des revendications précédentes, **caractérisé en ce que** ledit conduit d'entrée (16) est protégé par un disconnecteur à double clapet (18).

7. Dispositif (10) selon la revendication 6, **caractérisé en ce que** ledit tuyau de recirculation (28) est raccordé audit conduit d'entrée d'eau du système de distribution (16) en aval dudit disconnecteur à double clapet (18).

8. Dispositif (10) selon une quelconque des revendications précédentes, **caractérisé en ce qu'**il comprend un réducteur de débit de dioxyde de carbone (22) pour empêcher qu'une grande quantité de dioxyde de carbone ne pénètre dans ledit réservoir (12) afin d'occuper le volume fourni par l'eau gazéifiée (W) une fois qu'elle a été prélevée à travers ledit conduit de sortie (32).

9. Dispositif (10) selon une quelconque des revendications précédentes, **caractérisé en ce qu'**il comprend un interrupteur à flotteur (24) qui est en mesure de commander l'afflux de l'eau du système de distribution dans ledit réservoir (12).

10. Dispositif (10) selon une quelconque des revendications précédentes, **caractérisé en ce qu'**il comprend une soupape de décharge, qui assure une pression de service constante à l'intérieur dudit réservoir (12) et empêche ainsi la génération de pressions de service dépassant la capacité de fonctionnement de ladite pompe (26).

11. Dispositif (10) selon une quelconque des revendications précédentes, **caractérisé en ce qu'**il comprend une carte électronique, alimentée en basse tension, qui est en mesure de pourvoir à la commande de tous les composants dudit dispositif (10) et à la gestion de toutes les opérations connexes.

12. Dispositif (10) selon la revendication 11, **caractérisé en ce que** ladite carte électronique est en mesure de modifier l'intervalle de la durée d'ouverture de ladite électrovanne (30), et ainsi la durée de recirculation, pour modifier ainsi le niveau de saturation de l'eau gazéifiée (W).

13. Dispositif (10) selon la revendication 1, **caractérisé en ce que** ladite pompe (26) est une pompe à engrenages.
